# EUROPÄISCHE PATENTANMELDUNG

(11) **EP 3 599 047 A1**
(43) Veröffentlichungstag der Anmeldung: **29.01.2020**
(21) Anmeldenummer: 18185692.3
(22) Anmeldetag: 26.07.2018
(51) Int. Cl.: B23K 31/02, B23K 26/323, B23K 26/242, B23K 101/18, B23K 103/04, B23K 103/10, B23K 103/12, B23K 103/14, B23K 103/18

(54) **BAUTEIL UND VERFAHREN ZUM VERBINDEN EINES ERSTEN BEREICHS UND EINES ZWEITEN BEREICHS DURCH ENERGIESTRAHLSCHWEISSEN**

(71) Anmelder: Ceratizit Luxembourg Sàrl, 8232 Mamer (LU); University of Luxembourg, 1511 Luxembourg (LU)
(72) Erfinder: SCHIRY, Marc, 54472 Gornhausen (DE); PLAPPER, Peter, 54338 Schweich (DE); LANGER, Steffen, 8232 Mamer (LU); MAGIN, Michael, 8232 Mamer (LU)
(74) Vertreter: Ciesla, Dirk

(57) **Zusammenfassung**

Es wird ein Bauteil (1) bereitgestellt, mit einem ersten Bereich (2) aus einem ersten Material und einen zweiten Bereich (3) aus einem zweiten Material. Der erste Bereich (2) hat eine erste Hauptoberfläche (21) und eine zweite Hauptoberfläche (22). Der erste Bereich (2) und der zweite Bereich (3) sind stoffschlüssig über eine Stumpfstoß-Schweißverbindung entlang einer länglichen Schweißnaht (4) miteinander verbunden, die sich von der ersten Hauptoberfläche (21) bis zu der zweiten Hauptoberfläche (22) erstreckt. Die Schweißnaht (4) hat in einem Querschnitt senkrecht zu einer Längsrichtung (L) der Schweißnaht (4) eine keilförmige Querschnittsform derart, dass die Schweißnaht (4) auf der Seite der ersten Hauptoberfläche (21) eine größere Breite als auf der Seite der zweiten Hauptoberfläche (22) hat. Eine durch die Schweißnaht (4) bedingte Gefügeveränderung auf der Seite des ersten Bereichs (2) hat in Richtung von der ersten Hauptoberfläche (21) zu der zweiten Hauptoberfläche (22) eine im Wesentlichen konstante Breite (b₁) und eine durch die Schweißnaht (4) bedingte Gefügeveränderung auf der Seite des zweiten Bereichs (3) hat in Richtung von der ersten Hauptoberfläche (21) zu der zweiten Hauptoberfläche (22) eine abnehmende Breite (b₂).

## Beschreibung

Die vorliegende Erfindung betrifft ein Bauteil aufweisend zumindest einen ersten Bereich aus einem ersten Material und einen zweiten Bereich aus einem von dem ersten Material verschiedenen zweiten Material sowie ein Verfahren zum Verbinden eines ersten Bereichs aus einem ersten Material und eines zweiten Bereichs aus einem von dem ersten Material verschiedenen zweiten Material durch Energiestrahlschweißen.

Es ist bekannt, Bauteile mit verschiedenen Bereichen aus verschiedenen Materialien durch Energiestrahlschweißen herzustellen, wobei als Energiestrahl dabei typischerweise ein Laserstrahl oder ein Elektronenstrahl zum Einsatz kommt. Insbesondere bei einem spaltfreien Energiestrahlschweißen von zueinander verschiedenen hitzeempfindlichen Metallen in Form einer Stumpfstoß-Anordnung ("butt joint configuration") ohne Ausgangsspalt treten dabei aber häufig Schwierigkeiten auf. Häufig gehen mit den unterschiedlichen thermischen Eigenschaften der zu verbindenden Materialien Probleme einher und es kann zur Bildung von spröden intermetallischen Phasen sowie unerwünschten Gefügeveränderungen kommen. Insbesondere in dem Fall des Verbindens von z.B. Kupfer mit Aluminium, Titan mit Stahl oder Nickel mit Stahl, etc. stellt die Bildung von spröden intermetallischen Phasen ein Problem dar.

Um eine ausreichende Energiedichte für den Energiestrahlschweißprozess bereitzustellen, die einen schnellen Schweißprozess ermöglicht, kommen häufig fokussierte Energiestrahlen, insbesondere fokussierte Laserstrahlen oder Elektronenstrahlen zum Einsatz. Bei einer Verwendung von solchen fokussierten Energiestrahlen bei einem spaltfreien Stumpfstoß-Schweißprozess stellt es sich ferner als problematisch dar, dass die erzeugte Schweißnaht keine über ihre Dicke konstante Breite aufweist, sondern eine keilförmige Querschnittsform aufweist, sodass z.B. im Bereich einer ersten Oberfläche, an der die Schweißnaht breiter ausgebildet ist, vermehrt unerwünschte Ausscheidungen und Gefügeveränderungen auftreten.

Es hat sich gezeigt, dass es zu einer erfolgreichen Verbindung solcher ungleicher Materialien einer exakten Kontrolle der Ausbildung der Schweißnaht bedarf.

Es ist Aufgabe der vorliegenden Erfindung, ein verbessertes Bauteil mit einem ersten Bereich aus einem ersten Material und einen zweiten Bereich aus einem von dem ersten Material verschiedenen zweiten Material, die stoffschlüssig über eine Stumpfstoß-Schweißverbindung entlang einer länglichen Schweißnaht miteinander verbunden sind, und ein verbessertes Verfahren zum Verbinden eines ersten Bereichs aus einem ersten Material und eines zweiten Bereichs aus einem von dem ersten Material verschiedenen zweiten Material durch Energiestrahlschweißen zur Verfügung zu stellen.

Die Aufgabe wird durch ein Bauteil gemäß Anspruch 1 gelöst. Vorteilhafte Weiterbildungen sind in den abhängigen Ansprüchen angegeben.

Das Bauteil weist zumindest einen ersten Bereich aus einem ersten Material und einen zweiten Bereich aus einem von dem ersten Material verschiedenen zweiten Material auf. Der erste Bereich hat eine erste Hauptoberfläche und eine von dieser abgewandte zweite Hauptoberfläche. Der erste Bereich und der zweite Bereich sind stoffschlüssig über eine Stumpfstoß-Schweißverbindung entlang einer länglichen Schweißnaht miteinander verbunden, die sich von der ersten Hauptoberfläche bis zu der zweiten Hauptoberfläche erstreckt. Die Schweißnaht hat in einem Querschnitt senkrecht zu einer Längsrichtung der Schweißnaht eine keilförmige Querschnittsform derart, dass die Schweißnaht auf der Seite der ersten Hauptoberfläche eine größere Breite als auf der Seite der zweiten Hauptoberfläche aufweist. Eine durch die Schweißnaht bedingte Gefügeveränderung hat auf der Seite des ersten Bereichs in Richtung von der ersten Hauptoberfläche zu der zweiten Hauptoberfläche eine im Wesentlichen konstante Breite und eine durch die Schweißnaht bedingte Gefügeveränderung hat auf der Seite des zweiten Bereichs in Richtung von der ersten Hauptoberfläche zu der zweiten Hauptoberfläche eine abnehmende Breite.

Da sich die Schweißnaht von der ersten Oberfläche bis zu der zweiten Oberfläche erstreckt, kann eine mechanisch besonders stabile Verbindung zwischen dem ersten Bereich und dem zweiten Bereich ausgebildet werden. Die Schweißnaht kann ferner mit ihrer keilförmigen Querschnittsform in relativ einfacher und schneller Weise mit einem fokussierten Energiestrahl erzeugt werden. Da die durch die Schweißnaht bedingte Gefügeveränderung auf der Seite des ersten Bereichs eine im Wesentlichen konstante Breite aufweist, ist die über die Dicke der Schweißnaht unterschiedlich starke thermische Belastung gezielt in den zweiten Bereich aus dem zweiten Material verlagert. Dies ist insbesondere dann vorteilhaft, wenn das zweite Material gegenüber thermischer Belastung beim Strahlschweißprozess weniger empfindlich ist als das erste Material.

Gemäß einer Weiterbildung erstreckt sich eine erste Grenzfläche der Gefügeveränderung zu dem ersten Material im Wesentlichen senkrecht zu der ersten Hauptoberfläche und eine zweite Grenzfläche der Gefügeveränderung zu dem zweiten Material schließt einen Keilwinkel mit der ersten Grenzfläche ein. Durch die Erstreckung der ersten Grenzfläche der Schweißnaht zu dem ersten Material im Wesentlichen senkrecht zu der ersten Hauptoberfläche ist zuverlässig verhindert, dass das erste Material bei dem Strahlschweißprozess über die Dicke der Schweißnaht unterschiedlich stark thermisch belastet bzw. aufgeschmolzen wird. Es wird eine zuverlässige vollständige Anbindung zwischen dem ersten Material und dem zweiten Material entlang der gesamten Fügefläche erreicht. Unter im Wesentlich senkrecht zu der ersten Hauptoberfläche ist dabei nicht nur ein exakt senkrechter Verlauf zu verstehen, sondern es ist z.B. auch ein Verlauf umfasst, der leicht von der senkrechten Richtung abweicht. Der Keilwinkel zwischen der ersten Grenzfläche und der zweiten Grenzfläche kann insbesondere zumindest 10° betragen und sollte höchstens 60° betragen.

Gemäß einer Weiterbildung ist das erste Material gegenüber thermischer Belastung empfindlicher als das zweite Material. Insbesondere in diesem Fall wird eine besonders belastbare und zuverlässige Schweißverbindung erzielt.

Gemäß einer Weiterbildung ist das erste Material eine Aluminiumbasislegierung, eine Titanbasislegierung oder eine Nickelbasislegierung und das zweite Material eine Kupferbasislegierung oder Stahl. Insbesondere im Fall von solchen Materialkombinationen ist es besonders vorteilhaft, die thermische Belastung beim Schweißprozess in das zweite Material zu verlagern. Unter Basislegierung eines Metalls ist dabei zu verstehen, dass dieses Metall den Hauptbestandteil der Legierung in Atomprozent bildet. Der generische Begriff Metallbasislegierung eines bestimmten Metalls umfasst dabei auch das reine Metall, z.B. umfasst Titanbasislegierung auch reines Titan, etc. Mögliche weitere Materialkombinationen für das erste und das zweite Material sind z.B. Aluminium und Kupfer, Kupfer und Stahl, Aluminium und Stahl, Stellite und Stahl, Titan und Stahl, Magnesium und Aluminium, das Homopolyamid PA 6.6 und Aluminium, Invar und Stahl, PEEK (Polyetheretherketon) und Titan.

Gemäß einer Weiterbildung ist das erste Material ein Hartwerkstoff, der aus einem duktilen metallischen Binder und Hartstoffpartikeln besteht, wobei die Hartstoffpartikel zumindest 70 Gew.-% des Hartwerkstoffs bilden. Insbesondere in dem Fall eines solchen Hartwerkstoffs kann sich die thermische Belastung während des Schweißprozesses besonders nachteilig auf die Qualität der Schweißnaht auswirken.

Gemäß einer Weiterbildung sind die Hartstoffpartikel zumindest überwiegend durch Wolframkarbid gebildet, wie es insbesondere bei Hartmetall (cemented carbide) der Fall ist. Insbesondere kann der duktile metallische Binder eines oder mehrere von Fe, Co und Ni als Hauptbestandteile aufweisen, bevorzugt eine Ni-Basislegierung oder eine Co-Basislegierung sein. Insbesondere in diesen Fällen ist das erste Material besonders empfindlich gegenüber negativen Auswirkungen des Schweißprozesses.

Gemäß einer Weiterbildung ist das zweite Material Stahl. Insbesondere bei einer Verbindung zwischen einem Hartwerkstoff und Stahl kann durch die erfindungsgemäße Ausbildung der Schweißnaht ein besonders zuverlässiges Bauteil erzielt werden.

Wenn der Anteil des duktilen metallischen Binders an dem ersten Material weniger als 9 Gew.-% beträgt, ist es besonders schwierig, überhaupt eine stabile und zuverlässige Schweißverbindung auszubilden, was mit der erfindungsgemäßen Realisierung aber ermöglicht wird. Bevorzugt kann der Anteil des duktilen metallischen Binders weniger als 8 Gew.-% betragen.

Die Aufgabe wird auch durch ein Verfahren zum Verbinden eines ersten Bereichs aus einem ersten Material und eines zweiten Bereichs aus einem von dem ersten Material verschiedenen zweiten Material durch Energiestrahlschweißen nach Anspruch 10 gelöst. Vorteilhafte Weiterbildungen sind in den abhängigen Ansprüchen angegeben.

Bei dem Verfahren weist der erste Bereich eine erste Hauptoberfläche, eine von dieser abgewandte zweite Hauptoberfläche und eine sich von der ersten Hauptoberfläche zu der zweiten Hauptoberfläche erstreckende Verbindungsfläche auf und das Verbinden erfolgt als Stumpfstoß-Schweißverbindung der Verbindungsfläche mit einer Gegenfläche des zweiten Bereichs unter Ausbildung einer länglichen Schweißnaht, die sich von der ersten Hauptoberfläche bis zu der zweiten Hauptoberfläche erstreckt. Das Verfahren weist die Schritte auf:
- spaltfreies Inkontaktbringen der Verbindungsfläche mit der Gegenfläche unter Ausbildung einer Kontaktfläche,
- Ausrichten eines Energiestrahls auf den zweiten Bereich im Bereich der Kontaktfläche unter einem spitzen Einstrahlwinkel zu einer Flächennormalen der Kontaktfläche,
- Durchführen einer relativen Translationsbewegung zwischen dem Energiestrahl und der Kontaktfläche entlang der Kontaktfläche.

Durch das Ausrichten bzw. Verkippen des Energiestrahls auf den zweiten Bereich im Bereich der Kontaktfläche unter einem spitzen Einstrahlwinkel zu einer Flächennormalen der Kontaktfläche wird sichergestellt, dass die thermische Energie bei dem Strahlschweißprozess überwiegend in dem zweiten Material eingebracht wird, das bezüglich thermischer Belastung bevorzugt weniger empfindlich als das erste Material ist. Der spitze Winkel kann dabei insbesondere bevorzugt < 85°, mehr bevorzugt < 80° betragen, wobei der spitze Winkel gleichzeitig bevorzugt > 50°, mehr bevorzugt > 60° beträgt. Der spitze Winkel kann insbesondere bevorzugt - je nach der betroffenen Materialpaarung - so eingestellt werden, dass eine ausgebildete erste Grenzfläche der durch die Schweißnaht bedingten Gefügeveränderung zu dem ersten Material nach dem Strahlschweißprozess im Wesentlichen parallel zu der ursprünglichen Kontaktfläche verläuft und eine vollständige Anbindung des ersten Materials an das zweite Material sichergestellt werden kann. Bevorzugt kann der Energiestrahl ein fokussierter Energiestrahl sein, um einen besonders schnellen und effizienten Strahlschweißprozess zu ermöglichen.

Gemäß einer Weiterbildung ist der Energiestrahl ein Laserstrahl oder ein Elektronenstrahl. In diesem Fall kann der Strahlschweißprozess in besonders einfacher, schneller und kostengünstiger Weise erfolgen. Der Energiestrahl kann insbesondere ein fokussierter Laserstrahl oder ein fokussierter Elektronenstrahl sein.

Gemäß einer Weiterbildung ist der Translationsbewegung eine oszillierende Bewegung in einer Richtung quer zur Kontaktfläche überlagert. Durch das Durchführen der überlagerten Oszillationsbewegung des Energiestrahls kann mit einem stark fokussierten Energiestrahl gearbeitet werden, ohne dass Verbindungsprobleme zwischen dem ersten Material und den zweiten Material auftreten. Aufgrund der überlagerten Oszillationsbewegung deckt der Energiestrahl eine genau vorgebbare Breite in der Richtung von dem zweiten Material zu dem ersten Material ab. Diese Breite kann ferner in einfacher Weise durch Veränderung der Amplitude der Oszillationsbewegung in einer Richtung von dem zweiten Material zu dem ersten Material eingestellt und an die jeweilige Materialpaarung angepasst werden. Das erfindungsgemäße Verfahren ermöglicht folglich eine zuverlässige Strahlschweißverbindung mittels eines Energiestrahls in einfacher und kostengünstiger Weise auch bei schwierigen Materialpaarungen. Die überlagerte Oszillationsbewegung kann z.B. durch Überlagerung der Translationsbewegung mit einer kreisförmigen oder ovalen Bahnbewegung bereitgestellt werden. In diesem Fall wird bewirkt, dass der Energiestrahl relativ zu dem ersten und zweiten Material auf einer Bahn bewegt wird, die im Wesentlichen einer perspektivischen Ansicht einer Spiral- oder Schraubenbahn entspricht.

Gemäß einer Weiterbildung ist die überlagerte oszillierende Bewegung eine kreisförmige oder ovale Bahnbewegung in einer Ebene der ersten Hauptoberfläche. In diesem Fall ist die räumliche Relativbewegung zwischen dem Energiestrahl und dem ersten und zweiten Bereich in konstruktiv sehr einfacher Weise umsetzbar.

Gemäß einer Weiterbildung wird der Einstrahlwinkel des Energiestrahls konstant gehalten. In diesem Fall kann der Schweißprozess sehr einfach und zuverlässig erfolgen, indem z.B. die Quelle für den Energiestrahl ortsfest bleibt und der erste und zweite Bereich relativ dazu in einer Ebene bewegt werden oder der erste und der zweite Bereich ortsfest gehalten werden und die Quelle für den Energiestrahl relativ dazu in einer Ebene bewegt wird.

Gemäß einer Weiterbildung wird der Einstrahlwinkel des Energiestrahls so eingestellt wird, dass eine erste Grenzfläche der durch die Schweißnaht bedingten Gefügeveränderung zu dem ersten Material parallel zu der Kontaktfläche ausgebildet wird und eine zweite Grenzfläche der durch die Schweißnaht bedingten Gefügeveränderung zu dem zweiten Material einen Keilwinkel mit der ersten Grenzfläche einschließt. In diesem Fall ist besonders zuverlässig eine Strahlschweißverbindung auch dann ermöglicht, wenn das erste Material gegenüber thermischer Belastung beim Strahlschweißprozess empfindlich ist.

Gemäß einer Weiterbildung wird der Energiestrahl so fokussiert, dass die Schweißnaht in einem Querschnitt senkrecht zu einer Längsrichtung der Schweißnaht eine keilförmige Querschnittsform derart erhält, dass sie auf der Seite der ersten Hauptoberfläche eine größere Breite als auf der Seite der zweiten Hauptoberfläche erhält. In diesem Fall kann sehr präzise und schnell mit einer hohen Energiedichte geschweißt werden.

Gemäß einer Weiterbildung ist das erste Material ein Hartwerkstoff, der aus einem duktilen metallischen Binder und Hartstoffpartikeln besteht, wobei die Hartstoffpartikel zumindest 70 Gew.-% des Hartwerkstoffs bilden. Insbesondere bei einem solchen Material ermöglicht das erfindungsgemäße Verfahren eine zuverlässige Schweißverbindung mit dem zweiten Material.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische perspektivische Darstellung eines Bauteils gemäß einer Ausführungsform;
- Fig. 2:: eine schematische Darstellung einer Schweißnaht in einem Querschnitt zu einer Längsrichtung der Schweißnaht bei der Ausführungsform;
- Fig. 3a:: eine Fig. 2 entsprechende schematische Darstellung eines ersten Schrittes bei einem Verfahren gemäß der Ausführungsform;
- Fig. 3b:: eine schematische Darstellung eines zweiten Schrittes bei dem Verfahren gemäß der Ausführungsform;
- Fig. 4:: eine schematische Darstellung in Aufsicht der Relativbewegung zwischen einem Energiestrahl und den zu verschweißenden Bereichen bei der Ausführungsform;
- Fig. 5:: eine schematische Darstellung der mit dem Verfahren erzeugten Schweißnaht;
- Fig. 6:: eine schematische Darstellung eines beispielhaften Bauteils;
- Fig. 7:: eine schematische Darstellung eines beispielhaften anderen Bauteils; und
- Fig. 8:: eine schematische Darstellung eines weiteren beispielhaften Bauteils.

### AUSFÜHRUNGSFORM

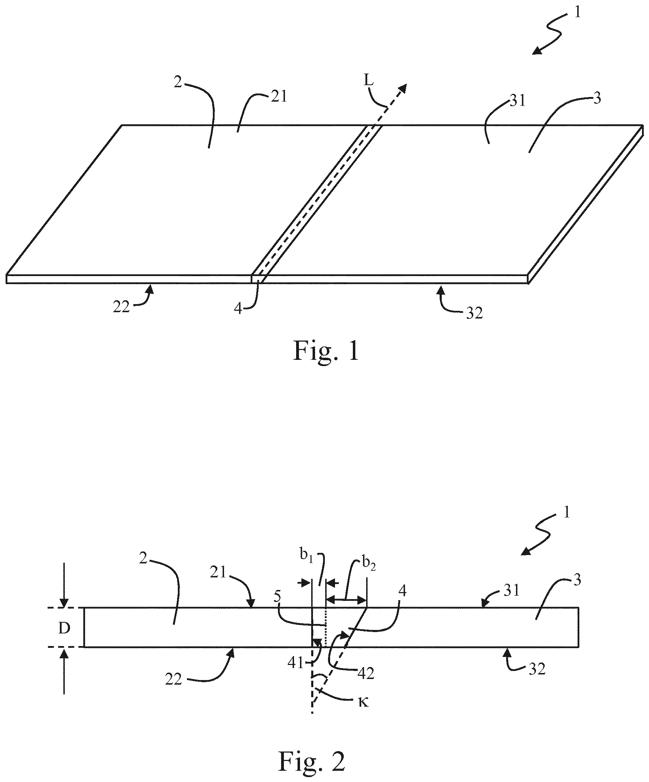

Eine Ausführungsform wird im Folgenden unter Bezugnahme auf die Fig. 1 bis Fig. 4 beschrieben.

Ein Bauteil 1 mit einem ersten Bereich 2 und einem zweiten Bereich 3, die über eine Schweißnaht 4 stoffschlüssig miteinander verbunden sind, ist in den Fig. 1 und Fig. 2 zu sehen. Der erste Bereich 2 besteht aus einem ersten Material und der zweite Bereich 3 besteht aus einem zweiten Material, das von dem ersten Material verschieden ist. Insbesondere kann das erste Material empfindlicher gegenüber thermischer Belastung bei einem Strahlschweißprozess sein als das zweite Material.

Der erste Bereich 2 hat bei dem dargestellten Beispiel eine plattenartige Form mit einer ersten Hauptoberfläche 21 und einer von dieser abgewandten zweiten Hauptoberfläche 22. Der plattenartige erste Bereich 2 hat eine Dicke D, wie in Fig. 2 schematisch dargestellt ist. Bei dem konkret dargestellten Beispiel hat auch der zweite Bereich 3 eine plattenartige Form mit einer oberen Hauptoberfläche 31 und einer unteren Hauptoberfläche 32 und hat zumindest im Wesentlichen dieselbe Dicke wie der erste Bereich 2.

Der erste Bereich 2 und der zweite Bereich 3 sind stoffschlüssig über eine Stumpfstoß-Schweißverbindung (butt joint configuration) entlang einer länglichen Schweißnaht 4 miteinander verbunden. Wie in den Fig. 1 und Fig. 2 dargestellt ist, erstreckt sich die Schweißnaht 4 von der ersten Hauptoberfläche 21 bis zu der zweiten Hauptoberfläche 22, sodass sie sich über die gesamte Dicke D des ersten Bereichs 2 erstreckt. Wie in Fig. 2 schematisch dargestellt ist, bedingt die Schweißnaht 4 eine lokale Gefügeveränderung die sich von der ursprünglichen Kontaktfläche 5 zwischen dem ersten Material und dem zweiten Material sowohl in Richtung des ersten Bereichs 2 als auch in Richtung des zweiten Bereichs 3 erstreckt.

Wie in Fig. 2 dargestellt ist, hat die Schweißnaht 4 in einem Querschnitt zu ihrer Längsrichtung L eine keilförmige Querschnittsform, sodass sie in auf der Seite der ersten Hauptoberfläche 21 eine größere Breite als auf der Seite der zweiten Hauptoberfläche 22 hat. Eine erste Grenzfläche 41 der durch die Schweißnaht 4 bedingten Gefügeveränderung zu dem ersten Material des ersten Bereichs 2 schließt mit einer zweiten Grenzfläche 42 der durch die Schweißnaht 4 bedingten Gefügeveränderung zu dem zweiten Material des zweiten Bereichs 3 einen Keilwinkel κ ein. Der Keilwinkel κ kann dabei bevorzugt in einem Bereich zwischen 10° und 60° liegen. Wie in Fig. 2 zu sehen ist, erstreckt sich die erste Grenzfläche 41 zumindest im Wesentlichen senkrecht zu der ersten Hauptoberfläche 21, wohingegen die zweite Grenzfläche 42 unter dem Keilwinkel κ zu der ersten Grenzfläche 41 verläuft. Die durch die Schweißnaht 4 bedingte Gefügeveränderung weist auf der Seite des ersten Bereichs 2 eine über die Dicke der Schweißnaht 4 im Wesentlichen konstante Breite b₁ auf. Auf der Seite des zweiten Bereichs 3 weist die durch die Schweißnaht 4 bedingte Gefügeveränderung hingegen in der Richtung von der ersten Hauptoberfläche 21 zu der Hauptoberfläche 22 eine abnehmende Breite b₂ auf.

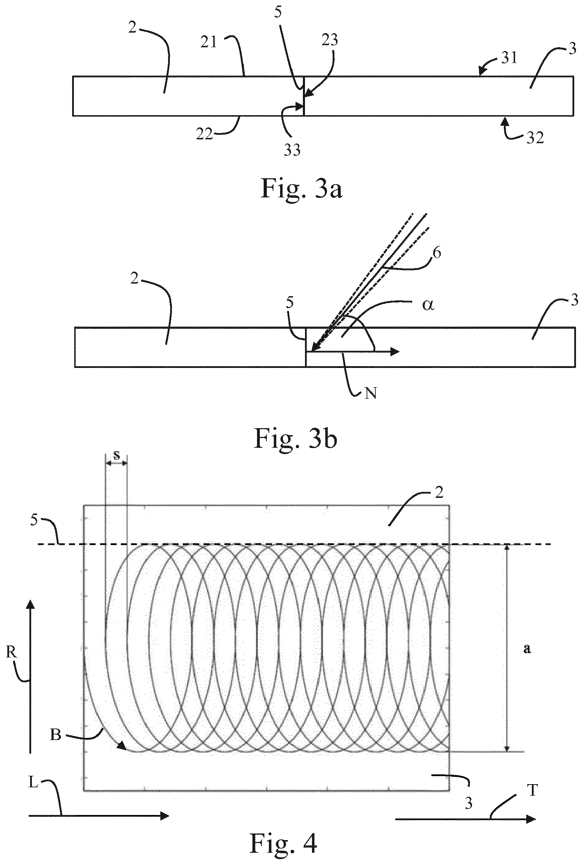

Nachfolgend wird unter ergänzender Bezugnahme auf Fig. 3 das Verfahren beschrieben, mit dem das zuvor beschriebene Bauteil 1 hergestellt wird.

Wie in Fig. 3a schematisch dargestellt ist, werden in einem ersten Schritt eine sich zwischen der ersten Hauptoberfläche 21 und der zweiten Hauptoberfläche 22 des ersten Bereichs 2 erstreckende Verbindungsfläche 23 und eine Gegenfläche 33 des zweiten Bereichs 3, die sich zwischen der oberen Oberfläche 31 und der unteren Oberfläche 33 des zweiten Bereichs erstreckt, derart miteinander in Kontakt gebracht, dass sie eine gemeinsame Kontaktfläche 5 ausbilden. Anschließend wird ein fokussierter Energiestrahl 6, der z.B. durch einen fokussierten Laserstrahl oder durch einen fokussierten Elektronenstrahl gebildet sein kann, unter einem spitzen Einstrahlwinkel α zu einer Flächennormalen N der Kontaktfläche 5 auf den zweiten Bereich 3 im Bereich der Kontaktfläche 5 gerichtet, d.h. in die Nähe der Kontaktfläche 5. Das genaue Winkelmaß des spitzen Einstrahlwinkels α hängt dabei von den verwendeten Materialien des ersten Bereichs 2 und des zweiten Bereichs 3, der Dicke der zu erzeugenden Schweißnaht, der Fokussierung des Energiestrahls 6, etc. ab.

Der Energiestrahl 6 wird anschließend relativ zu der Kontaktfläche 5 auf einer Bewegungsbahn geführt, die nun unter Bezugnahme auf Fig. 4 eingehender beschrieben wird. Die Relativbewegung zwischen dem Energiestrahl 6 und den zu verbindenden Bereichen kann dabei z.B. durch eine entsprechende Bewegung der Quelle des Energiestrahls oder durch eine entsprechende Bewegung der zu verbindenden Bereiche erfolgen. Der unter dem spitzen Einstrahlwinkel α verkippte fokussierte Energiestrahl 6 wird einerseits in einer Translationsbewegung T entlang der Kontaktfläche 5 in der Längsrichtung L der zu erzeugenden Schweißnaht bewegt. Dies entspricht einer Bewegung in der Richtung von links nach rechts in Fig. 4. Dieser Translationsbewegung T ist bei dem konkreten Beispiel eine oszillierende Bewegung in einer Richtung R quer zur Kontaktfläche 5 überlagert, sodass sich die in Fig. 4 gezeigte spiral- oder schraubenartige Bewegungsbahn B des Energiestrahls 6 relativ zu den zu verbindenden Bereichen ergibt. Obwohl in Fig. 4 beispielhaft ein Fall dargestellt ist, bei dem die überlagerte oszillierende Bewegung eine kreisförmige Bewegung ist, was steuerungstechnisch besonders einfach zu realisieren ist, kann die überlagerte oszillierende Bewegung auch eine andere Form haben, insbesondere z.B. einen ovalen Bewegungsverlauf haben. Ferner ist es optional auch möglich, ohne eine solche überlagerte oszillierende Bewegung zu arbeiten.

Bei der speziellen in Fig. 4 dargestellten spiral- oder schraubenartigen Bewegungsbahn B der Relativbewegung zwischen Energiestrahl 6 und den zu verbindenden Bereichen 2, 3 ist die Bewegungsbahn B durch die Amplitude a der Spirale und die Wiederholbreite s ihrer Schlaufen bestimmt. Durch eine Veränderung der Amplitude a kann in einfacher Weise die Breite der resultierenden Schweißnaht 4 eingestellt werden.

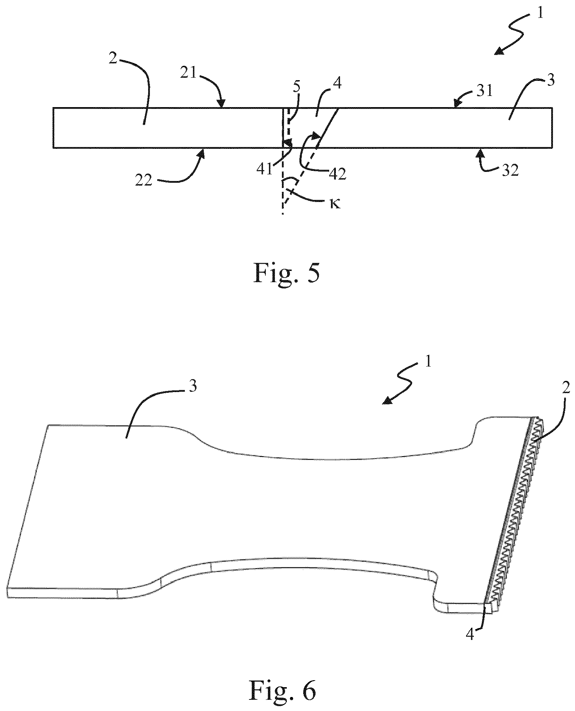

Die aus dem zuvor beschriebenen Strahlschweißprozess resultierende Schweißnaht 4 ist in Fig. 5 schematisch in einer Schnittdarstellung senkrecht zur Längsrichtung L der Schweißnaht 4 dargestellt.

Wie in Fig. 5 dargestellt ist, ist die erste Grenzfläche 41 der durch die Schweißnaht 4 bedingten Gefügeveränderung zu dem ersten Bereich 2 derart eingestellt, dass sie im Wesentlichen parallel zu der ursprünglichen Kontaktfläche 5 zwischen dem ersten Bereich 2 und dem zweiten Bereich 3 verläuft. Die zweite Grenzfläche 42 der durch die Schweißnaht 4 bedingten Gefügeveränderung zu dem zweiten Bereich 3 verläuft unter dem Keilwinkel κ zu der ersten Grenzfläche 41. Die Ausrichtung der ersten Grenzfläche 41 der Gefügeveränderung relativ zu der ursprünglichen Kontaktfläche 5 kann durch eine Veränderung des Einstrahlwinkels α des Energiestrahls 6 gezielt eingestellt werden.

Fig. 6 ist eine schematische Darstellung eines beispielhaften Bauteils 1 gemäß der Ausführungsform. Bei dem dargestellten Beispiel ist das Bauteil 1 als eine Klinge für eine Oszillationssäge ausgebildet.

Das Bauteil 1 weist einen ersten Bereich 2 auf, der bei dem Beispiel als ein plattenartig ausgebildeter Schneidenbereich aus Hartmetall ausgebildet ist, in den eine Vielzahl von Zähnen eingeschliffen ist. Der erste Bereich 2 ist über eine Schweißnaht 4, wie sie oben beschrieben wurde, mit einem zweiten Bereich 3 stoffschlüssig verbunden. Der zweite Bereich 3 ist bei dem Beispiel als ein Klingenkörper aus Stahl zur Verbindung mit einer Aufnahme einer Oszillationssäge ausgebildet.

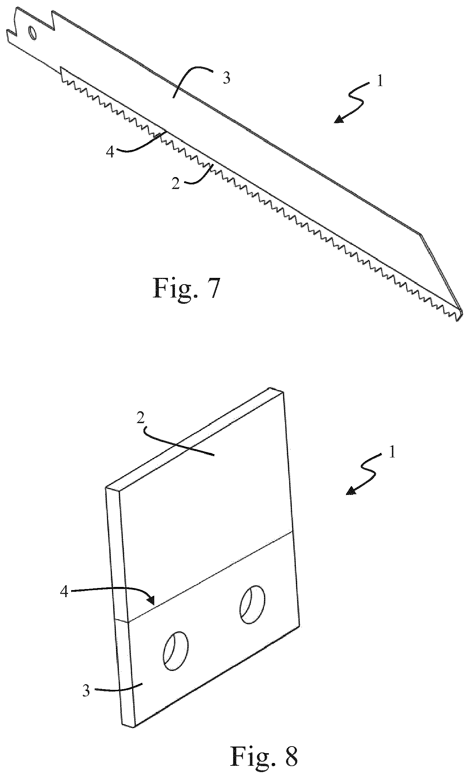

Fig. 7 ist eine schematische Darstellung eines anderen beispielhaften Bauteils 1, das als Sägeblatt für eine Stichsäge ausgebildet ist. Das Bauteil 1 weist wiederum einen plattenartigen ersten Bereich 2 aus Hartmetall auf, der als eine Schneidleiste ausgebildet und mit einer Vielzahl von Schneidzähnen versehen ist. Der erste Bereich 2 ist über eine Schweißnaht 4, die in der oben angegebenen Weise ausgebildet ist, stoffschlüssig mit einem zweiten Bereich 3 verbunden, der auch bei diesem Beispiel als ein Trägerkörper aus Stahl ausgebildet ist, insbesondere als Stichsägen-Sägeblattkörper zur Verbindung mit einer Stichsäge bei dem konkreten Beispiel.

Ein weiteres beispielhaftes Bauteil 1 ist in Fig. 8 schematisch dargestellt. Auch dieses Bauteil 1 weist einen ersten Bereich 2 aus einem ersten Material auf, der über eine zuvor beschriebene Schweißnaht 4 mit einem zweiten Bereich 3 aus einem zweiten Material verbunden ist, das gegenüber thermischer Belastung weniger empfindlich ist als das erste Material. Auch bei diesem Bauteil 1 kann der erste Bereich 2 z.B. aus Hartmetall gebildet sein und der zweite Bereich 3 aus z.B. Stahl. Es ist z.B. aber auch möglich, dass der erste Bereich 2 aus Aluminium oder einer Aluminiumlegierung gebildet ist und der zweite Bereich 3 aus z.B. Stahl, Kupfer oder einer Kupferlegierung. Auch weitere Materialpaarungen mit unterschiedlichen thermischen Eigenschaften sind möglich, wie z.B. insbesondere Titan oder eine Titanlegierung und Stahl, oder Nickel oder eine Nickellegierung und Stahl. Es ist unmittelbar ersichtlich, dass auch noch weitere andere Materialpaarungen möglich sind, insbesondere die oben bereits genannten weiteren Materialpaarungen.

## Patentansprüche

1. Bauteil (1) aufweisend zumindest einen ersten Bereich (2) aus einem ersten Material und einen zweiten Bereich (2) aus einem von dem ersten Material verschiedenen zweiten Material,
wobei der erste Bereich (2) eine erste Hauptoberfläche (21) und eine von dieser abgewandte zweite Hauptoberfläche (22) aufweist und der erste Bereich (2) und der zweite Bereich (3) stoffschlüssig über eine Stumpfstoß-Schweißverbindung entlang einer länglichen Schweißnaht (4) miteinander verbunden sind, die sich von der ersten Hauptoberfläche (21) bis zu der zweiten Hauptoberfläche (22) erstreckt,
wobei die Schweißnaht (4) in einem Querschnitt senkrecht zu einer Längsrichtung (L) der Schweißnaht (4) eine keilförmige Querschnittsform derart aufweist, dass die Schweißnaht (4) auf der Seite der ersten Hauptoberfläche (21) eine größere Breite als auf der Seite der zweiten Hauptoberfläche (22) aufweist,
wobei eine durch die Schweißnaht (4) bedingte Gefügeveränderung auf der Seite des ersten Bereichs (2) in Richtung von der ersten Hauptoberfläche (21) zu der zweiten Hauptoberfläche (22) eine im Wesentlichen konstante Breite (b₁) aufweist und eine durch die Schweißnaht (4) bedingte Gefügeveränderung auf der Seite des zweiten Bereichs (3) in Richtung von der ersten Hauptoberfläche (21) zu der zweiten Hauptoberfläche (22) eine abnehmende Breite (b₂) aufweist.

2. Bauteil nach Anspruch 1, wobei sich eine erste Grenzfläche (41) der Gefügeveränderung zu dem ersten Material im Wesentlichen senkrecht zu der ersten Hauptoberfläche (21) erstreckt und eine zweite Grenzfläche (42) der Gefügeveränderung zu dem zweiten Material einen Keilwinkel (κ) mit der ersten Grenzfläche (41) einschließt.

3. Bauteil nach Anspruch 1 oder 2, wobei das erste Material gegenüber thermischer Belastung empfindlicher ist als das zweite Material.

4. Bauteil nach einem der Ansprüche 1 bis 3, wobei das erste Material eine Aluminiumbasislegierung, eine Titanbasislegierung oder eine Nickelbasislegierung ist und das zweite Material eine Kupferbasislegierung oder Stahl ist.

5. Bauteil nach einem der Ansprüche 1 bis 3, wobei das erste Material ein Hartwerkstoff ist, der aus einem duktilen metallischen Binder und Hartstoffpartikeln besteht, wobei die Hartstoffpartikel zumindest 70 Gew.-% des Hartwerkstoffs bilden.

6. Bauteil nach Anspruch 5, wobei die Hartstoffpartikel zumindest überwiegend durch Wolframkarbid gebildet sind.

7. Bauteil nach Anspruch 5 oder 6, wobei der duktile metallische Binder eines oder mehrere von Fe, Co und Ni als Hauptbestandteile aufweist, bevorzugt eine Ni-Basislegierung oder eine Co-Basislegierung ist.

8. Bauteil nach einem der Ansprüche 5 bis 7, wobei das zweite Material Stahl ist.

9. Bauteil nach einem der Ansprüche 5 bis 8, wobei der Anteil des duktilen metallischen Binders an dem ersten Material weniger als 9 Gew.-% beträgt, bevorzugt weniger als 8 Gew.-%.

10. Verfahren zum Verbinden eines ersten Bereichs (2) aus einem ersten Material und eines zweiten Bereichs (3) aus einem von dem ersten Material verschiedenen zweiten Material durch Energiestrahlschweißen, wobei der erste Bereich (2) eine erste Hauptoberfläche (21), eine von dieser abgewandte zweite Hauptoberfläche (22) und eine sich von der ersten Hauptoberfläche (21) zu der zweiten Hauptoberfläche (22) erstreckende Verbindungsfläche (23) aufweist, wobei das Verbinden als Stumpfstoß-Schweißverbindung der Verbindungsfläche (23) mit einer Gegenfläche (33) des zweiten Bereichs (3) unter Ausbildung einer länglichen Schweißnaht (4) erfolgt, die sich von der ersten Hauptoberfläche (21) bis zu der zweiten Hauptoberfläche (22) erstreckt, wobei das Verfahren die folgenden Schritte aufweist:
- spaltfreies Inkontaktbringen der Verbindungsfläche (23) mit der Gegenfläche (33) unter Ausbildung einer Kontaktfläche (5),
- Ausrichten eines Energiestrahls (6) auf den zweiten Bereich (3) im Bereich der Kontaktfläche (5) unter einem spitzen Einstrahlwinkel (a) zu einer Flächennormalen (N) der Kontaktfläche (5),
- Durchführen einer relativen Translationsbewegung (T) zwischen dem Energiestrahl (6) und der Kontaktfläche (5) entlang der Kontaktfläche.

11. Verfahren nach Anspruch 10, wobei der Energiestrahl (6) ein Laserstrahl oder ein Elektronenstrahl ist.

12. Verfahren nach Anspruch 10 oder 11, wobei der Translationsbewegung (T) eine oszillierende Bewegung in einer Richtung quer zur Kontaktfläche (5) überlagert ist.

13. Verfahren nach Anspruch 12, wobei die überlagerte oszillierende Bewegung eine kreisförmige oder ovale Bahnbewegung in einer Ebene der ersten Hauptoberfläche (21) ist.

14. Verfahren nach einem der Ansprüche 10 bis 13, wobei der Einstrahlwinkel (α) des Energiestrahls (6) konstant gehalten wird.

15. Verfahren nach einem der Ansprüche 10 bis 14, wobei der Einstrahlwinkel (α) des Energiestrahls (6) so eingestellt wird, dass eine erste Grenzfläche (41) einer durch die Schweißnaht (4) bedingten Gefügeveränderung zu dem ersten Material parallel zu der Kontaktfläche (5) ausgebildet wird und eine zweite Grenzfläche (42) der durch die Schweißnaht (4) bedingten Gefügeveränderung zu dem zweiten Material einen Keilwinkel (κ) mit der ersten Grenzfläche (41) einschließt.

16. Verfahren nach einem der Ansprüche 10 bis 15, wobei der Energiestrahl (6) so fokussiert wird, dass die Schweißnaht (4) in einem Querschnitt senkrecht zu einer Längsrichtung (L) der Schweißnaht (4) eine keilförmige Querschnittsform derart erhält, dass sie auf der Seite der ersten Hauptoberfläche (21) eine größere Breite als auf der Seite der zweiten Hauptoberfläche (22) erhält.

17. Verfahren nach einem der Ansprüche 10 bis 16, wobei das erste Material ein Hartwerkstoff ist, der aus einem duktilen metallischen Binder und Hartstoffpartikeln besteht, wobei die Hartstoffpartikel zumindest 70 Gew.-% des Hartwerkstoffs bilden.
